# FASCICULE DE BREVET EUROPEEN

(11) **EP 3 854 685 B1**
(45) Date de publication et mention de la délivrance du brevet: **13.07.2022**
(21) Numéro de dépôt: 20208977.7
(22) Date de dépôt: 20.11.2020
(51) Int. Cl.: B64C 39/02, G05D 1/10, G01C 21/20, G01C 21/16

(54) **DRONE MULTIROTOR EQUIPE D'UNE PROTECTION PERIPHERIQUE ET PROCEDE DE COMMANDE D'UN TEL DRONE MULTIROTOR**
MEHRROTORIGE DROHNE MIT PERIPHEREM SCHUTZ, UND STEUERVERFAHREN EINER SOLCHEN MEHRROTORIGEN DROHNE
MULTIROTOR DRONE PROVIDED WITH A PERIPHERAL PROTECTION AND METHOD FOR CONTROLLING SUCH A MULTIROTOR DRONE

(30) Priorité: 27.01.2020 FR 2000763
(43) Date de publication de la demande: 28.07.2021
(73) Titulaire: Airbus Helicopters, 13725 Marignane Cedex (FR)
(72) Inventeur: THOMASSEY, Lionel, 13270 FOS SUR MER (FR)
(74) Mandataire: GPI Brevets

(56) Documents cités:
- EP-A1- 3 239 048
- EP-A1- 3 470 787
- EP-A1- 3 492 378
- JP-A- H04 138 995
- US-A1- 2019 206 266

## Description

La présente invention concerne un drone multirotor équipé d'une protection visant à éviter aux rotors d'entrer en collision avec des obstacles. Un tel drone peut ainsi comporter au moins deux rotors agencés l'un à coté des autres et entrainés en rotations respectivement par au moins deux moteurs électriques solidaires d'un châssis porteur.

Plus particulièrement, l'invention se rapporte au domaine des systèmes de pilotage autonome d'un drone c'est-à-dire sans être piloté à distance et sans suivre un parcours initialement préparé et mémorisé dans le drone.

Un tel type de drone peut notamment être utilisé pour effectuer une mission de recherche de blessés ou plus simplement de personnes en danger dans un bâtiment enfumé, voire en feu ou en présence de fumées éventuellement toxiques.

De façon connue, il existe des drones équipés d'une protection continue périphérique apte à protéger latéralement les au moins deux rotors lors d'une collision. Par ailleurs on connait également des systèmes pour détecter la présence d'un obstacle et pour modifier une trajectoire du drone afin d'éviter une collision avec cet obstacle. De tels systèmes de détection utilisent alors par exemple des caméras ou plus généralement une détection et une estimation de la distance parcourue par la lumière entre le drone et un obstacle en utilisant notamment un faisceau laser et en mesurant le temps nécessaire au faisceau laser pour se réfléchir sur un obstacle.

Cependant de tels systèmes de détection peuvent se révéler complexes à intégrer à un drone et peuvent posséder une masse importante. De plus, les conditions environnementales telles que du brouillard, de la fumée ou de la pluie peuvent limiter de façon importante les performances et la fiabilité d'un tel système de détection d'obstacles.

Tel que décrit dans les documents EP 3 239 048, EP 3 492 378, JP H04138995, US 2019/206266, EP 3 470 787 et: EP 3 702 280, il est également connu d'équiper des drones avec une cage de protection et/ou avec des jauges contraintes visant détecter des déformations dans des éléments de cette cage de protection.

Cependant, de tels drones ne sont quant eux pas aptes à se déplacer de manière autonome dans un environnement clos ou présentant de nombreux obstacles.

La présente invention a alors pour objet de proposer un drone apte à se diriger dans un espace à visibilité réduite. Ce drone présente en effet un système de détection d'obstacles amélioré peu sensible aux conditions environnementales dans lesquelles évolue un tel drone.

L'invention se rapporte donc à un drone multirotor, ce drone comportant :
- un châssis porteur,
- au moins deux rotors de propulsion et/ou de sustentation mobiles en rotation indépendamment les uns des autres par rapport au châssis porteur, les au moins deux rotors étant agencés les uns à côté des autres dans un plan P,
- une protection continue périphérique protégeant latéralement les au moins deux rotors lors d'une collision du drone avec un obstacle agencé latéralement par rapport à une direction en élévation Z, la direction en élévation Z étant agencée perpendiculairement au plan P, la protection continue périphérique comportant une paroi externe périphérique apte à se déformer élastiquement sous l'effet d'une force de réaction exercée par l'obstacle sur la paroi externe périphérique lors de la collision, et
- au moins deux capteurs de déformation agencés au niveau de la paroi externe périphérique, chaque capteur de déformation étant apte à effectuer des mesures variant en fonction d'une déformation de la paroi externe périphérique.

Ce drone est remarquable en ce qu'il comporte :
- une unité de traitement connectée aux au moins deux capteurs de déformation, l'unité de traitement étant configurée pour déterminer, à partir des mesures de chaque capteur de déformation, une position d'impact de la force de réaction, et
- un organe de commande pour générer des consignes de commande des au moins rotors, les consignes de commande étant générées sous la dépendance de la position d'impact de la force de réaction sur la paroi externe périphérique déterminée à partir de l'unité de traitement.

Autrement dit, un tel drone est apte à détecter une collision avec un obstacle et à modifier en conséquence les consignes de commande de ses au moins deux rotors pour repartir dans une autre direction.

Les au moins deux capteurs de déformation peuvent par exemple être formés par des extensomètres à fils résistants généralement désignés par des jauges de contrainte. Ces capteurs sont avantageusement rapportés par collage sur la paroi externe périphérique et permettent alors de traduire la déformation ou plus précisément des mesures de la contrainte normale en flexion de la paroi externe périphérique par des variations de résistance électrique à leurs bornes.

L'unité de traitement compare ainsi une tension électrique pour mesurer les variations de résistance électrique lors d'un impact avec un obstacle et permet d'en déduire sa position sur la paroi externe périphérique. Grâce à cette position d'impact et connaissant la direction de déplacement du drone dépendant des consignes courantes des au moins deux rotors, l'unité de traitement est alors apte à déterminer une direction d'impact de la force de réaction F sur la paroi externe périphérique.

Une fois cette direction d'impact de la force de réaction F connue, l'organe de commande peut alors générer de nouvelles consignes de commande des rotors en tant que tels, ou d'au moins deux moteurs électriques indépendants entrainant ces au moins deux rotors. Ces nouvelles consignes de commande permettent alors au drone de s'écarter de l'obstacle et de continuer sa mission par exemple de recherche de personne via un pilotage autonome.

Avantageusement, au moins un des au moins deux capteurs de déformation peut être agencé à équidistance de deux rotors adjacents des au moins deux rotors.

En d'autres termes, les capteurs de déformation sont positionnés sur la paroi externe périphérique entre les rotors. Dans ce cas, un tel drone comporte au moins autant de capteurs de déformation que de rotors.

Selon un premier exemple de réalisation de l'invention, la protection continue périphérique peut être solidarisée selon une liaison de type encastrement avec le châssis porteur du drone.

Dans ce cas, la protection continue périphérique est alors agencée en étant solidaire du châssis porteur et ne comporte donc aucun degré de mobilité par rapport au châssis porteur.

Selon un second exemple de réalisation de l'invention, la protection continue périphérique peut comporter au moins un degré de mobilité en rotation par rapport au châssis porteur du drone.

Ainsi, lors du déplacement du drone, des mouvements du châssis porteur sont générés en inclinaison selon par exemple un axe de tangage et/ou un axe de roulis. La protection continue périphérique peut alors également pivoter relativement par rapport au châssis porteur suivant par exemple un axe de tangage et/ou un axe de roulis. De cette manière quelle que soit l'inclinaison du châssis porteur par rapport au sol, la protection continue périphérique peut conserver une orientation sensiblement horizontale permettant de protéger latéralement les rotors d'une collision avec un obstacle.

En pratique, la protection continue périphérique peut présenter une forme symétrique de révolution, les au moins deux capteurs de déformation étant agencés angulairement de façon équirépartie au niveau de la paroi externe périphérique.

Autrement dit, la protection continue périphérique s'étend de façon continue autour de l'axe en élévation du drone. De plus, les capteurs de déformation sont alors agencés sur la paroi externe périphérique en étant régulièrement décalés angulairement d'une même valeur autour de l'axe en élévation Z.

Selon un autre aspect de l'invention, la paroi externe périphérique peut présenter une forme choisie parmi le groupe comportant les portions cylindriques, les portions sphériques, les portions ovoïdales et les portions toriques.

Ainsi, la paroi externe périphérique est apte à ne pas entrer en collision avec les rotors même éventuellement lorsque la protection continue périphérique comporte au moins un degré de mobilité en rotation par rapport au châssis porteur.

Avantageusement, la protection continue périphérique peut présenter une ouverture plane supérieure agencée au dessus des au moins deux rotors et une ouverture plane inférieure agencée en dessous des au moins deux rotors au regard de la direction en élévation Z.

Ces ouvertures planes inférieure et supérieure permettent ainsi à un flux d'air descendant de passer au travers des rotors et de générer la sustentation et/ou la propulsion d'un tel drone.

En pratique, l'une au moins des ouvertures planes supérieure et inférieure peut comporter une grille de protection permettant de protéger en élévation les au moins deux rotors.

Autrement dit, deux grilles de protection peuvent être agencées à la fois au niveau des ouvertures planes supérieure et inférieure pour éviter des collisions avec des objets positionnés au dessus et en dessous du drone selon la direction en élévation. Un tel agencement peut notamment être utile lorsque le drone effectue une mission de pilotage en autonomie nécessitant de procéder à des variations de hauteur ou dans un lieu confiné présentant un grand nombre d'obstacles.

En outre une telle grille de protection peut présenter un taux d'ouverture relativement important de manière à ne pas perturber le flux d'air généré par les au moins deux rotors.

Selon une première variante de l'invention, l'organe de commande peut générer les consignes de commande pour orienter le drone suivant une direction d'impact orientée depuis la position d'impact de la force de réaction sur la paroi externe périphérique vers un centre géométrique du drone.

Ainsi lorsque le drone entre en collision avec un obstacle, les consignes de commande sont générées pour orienter le drone suivant une direction de repli opposée à celle où se trouve localisé l'obstacle.

Un tel centre géométrique du drone correspond au centre du cercle circonscrit à l'intérieur duquel la protection continue périphérique peut être agencée. Un tel centre géométrique peut avantageusement être confondu avec un centre de gravité du drone.

En outre, le drone peut comporter un système de cartographie pour cartographier des positions d'une pluralité d'obstacles, le système de cartographie comportant au moins une mémoire pour stocker les positions de la pluralité d'obstacles.

Un tel système de cartographie permet ainsi de stocker dans la mémoire les positions des différents obstacles rencontrés par le drone. Un tel système de cartographie peut notamment utiliser un odomètre pour connaître une position courante du drone par rapport à une position de référence en fonction des consignes de commande des au moins deux rotors et du temps. Ce système de cartographie peut en outre également se présenter sous la forme d'un système de localisation et cartographie simultanées, désigné en langue anglaise sous les acronymes de SLAM signifiant Simultaneous Localization and Mapping ou de CML pour Concurrent Mapping and Localization.

Selon une seconde variante de l'invention, le système de cartographie étant connecté à l'organe de commande, l'organe de commande peut générer les consignes de commande sous la dépendance d'une part de la position d'impact de la force de réaction F sur la paroi externe périphérique et d'autre part des positions de la pluralité d'obstacles stockées dans la mémoire.

Selon cette seconde variante, lors d'une collision avec un obstacle, les nouvelles consignes de commande sont donc générées en tenant compte des positions des obstacles précédemment rencontrés par le drone. Après une collision, le drone ne repart donc pas obligatoirement selon la direction opposée à la position d'impact de la force de réaction F mais peut être dévié latéralement par rapport à cette direction pour éviter un obstacle précédemment rencontré dont la position a été enregistrée dans la mémoire embarquée sur le drone.

La présente invention a aussi pour objet un procédé de commande d'un drone multirotor, le drone comportant :
- un châssis porteur,
- au moins deux rotors de propulsion et/ou de sustentation mobiles en rotation indépendamment les uns des autres par rapport au châssis porteur, les au moins deux rotors étant agencés les uns à côté des autres dans un plan P,
- une protection continue périphérique protégeant latéralement les au moins deux rotors lors d'une collision du drone avec un obstacle agencé latéralement par rapport à une direction en élévation Z, la direction en élévation Z étant agencée perpendiculairement au plan P, la protection continue périphérique comportant une paroi externe périphérique apte à se déformer élastiquement sous l'effet d'une force de réaction exercée par l'obstacle sur la paroi externe périphérique lors de la collision.

Selon l'invention un tel procédé est remarquable en ce qu'il comporte au moins :
- une étape de détection d'une déformation de la paroi externe périphérique,
- une étape de traitement pour déterminer, à partir de la déformation de la paroi externe périphérique, une position d'impact de la force de réaction F, et
- une étape de commande générant des consignes de commande des au moins deux rotors, les consignes de commande étant générées sous la dépendance de la position d'impact de la force de réaction F sur la paroi externe périphérique déterminée à l'étape de traitement.

Un tel procédé permet ainsi à un drone de s'orienter de manière autonome à l'intérieur d'un bâtiment en entrant en collision avec les parois ou des obstacles.

L'étape de détection de la déformation de la paroi externe périphérique est par exemple réalisée au moyen d'au moins deux capteurs de déformation agencés sur cette paroi externe périphérique.

L'étape de traitement est quant à elle mise en œuvre au moyen d'une unité de traitement connectée aux au moins deux capteurs de déformation pour déterminer, à partir des mesures de chaque capteur de déformation, la position d'impact de la force de réaction F.

Enfin l'étape de commande permet quant à elle de modifier les consignes de commande des au moins deux rotors pour permettre au drone de continuer sa mission en changeant de direction en fonction de la position d'impact de la force de réaction F détectée au niveau de la paroi externe périphérique.

Selon une première variante de l'invention, l'étape de commande peut générer les consignes de commande pour commander un déplacement du drone suivant une direction d'impact de la force de réaction F sur la paroi externe périphérique vers un centre géométrique du drone.

Ainsi dans ce cas, le drone repart dans un sens opposé à l'obstacle et plus précisément suivant la direction d'impact de la force de réaction F exercée par l'obstacle sur la paroi externe périphérique.

Avantageusement, les au moins deux rotors comprenant un premier rotor tournant à une première vitesse de rotation Ω1, un deuxième rotor tournant à une deuxième vitesse de rotation Ω2, un troisième rotor tournant à une troisième vitesse de rotation Ω3 et un quatrième rotor tournant à une quatrième vitesse de rotation Ω4 et la direction de repli étant concourante avec au moins un axe de rotation du quatrième rotor agencé en regard de la position d'impact de la force de réaction F sur la paroi externe périphérique, l'étape de commande peut générer les consignes de commande pour augmenter la quatrième vitesse de rotation Ω4 du quatrième rotor, pour baisser la deuxième vitesse de rotation Ω2 du deuxième rotor agencé à l'opposé de la position d'impact et pour maintenir constante les première et troisième vitesses de rotation Ω1 et Ω3 des premier et troisième rotors agencés de part et d'autre de la direction de repli.

En pratique et selon un autre aspect de l'invention, les au moins deux rotors comprenant un premier rotor tournant à une première vitesse de rotation Ω1, un deuxième rotor tournant à une deuxième vitesse de rotation Ω2, un troisième rotor tournant à une troisième vitesse de rotation Ω3 et un quatrième rotor tournant à une quatrième vitesse de rotation Ω4, la direction de repli étant non concourante avec les quatre axes de rotation des premier, deuxième, troisième et quatrième rotors et les premier et deuxième rotors étant agencés à proximité de la position d'impact de la force de réaction F sur la paroi externe périphérique, l'étape de commande peut générer les consignes de commande pour augmenter les première, deuxième et quatrième vitesses de rotation Ω1, Ω2 et Ω4 et pour baisser la troisième vitesse de rotation Ω3.

Par ailleurs, le procédé peut comporter une étape de cartographie pour cartographier des positions d'une pluralité d'obstacles, l'étape de cartographie comportant au moins une sous étape de mémorisation pour stocker dans une mémoire les positions de la pluralité d'obstacles.

Ainsi, une telle étape de cartographie permet au drone de stocker dans une mémoire un ensemble de positions correspondant aux différents obstacles avec lesquels il est entré en collision lors de sa mission. L'étape de cartographie comporte donc des sous étapes d'enregistrement de coordonnées de chaque obstacle dans une base de données stockée dans la mémoire et mise à jour à chaque collision.

Dans ce cas et selon une seconde variante de l'invention, l'étape de commande peut générer les consignes de commande sous la dépendance d'une part de la position d'impact de la force de réaction F sur la paroi externe périphérique et d'autre part des positions de la pluralité d'obstacles stockées dans la mémoire.

Ainsi selon cette seconde variante, le drone peut alors utiliser les coordonnées des obstacles précédemment mémorisés pour définir une nouvelle trajectoire à effectuer. Cette nouvelle trajectoire est alors déterminée lors d'une étape de commande visant à générer de nouvelles consignes de commande des au moins deux rotors.

L'invention et ses avantages apparaîtront avec plus de détails dans le cadre de la description qui suit avec des exemples donnés à titre illustratif en référence aux figures annexées qui représentent :
[Fig 1] la figure 1, une vue en perspective d'un premier exemple de drone conforme à l'invention,
[Fig 2] la figure 2, une vue de dessus du premier exemple de drone conforme à l'invention,
[Fig 3] la figure 3, une vue de côté du premier exemple de drone conforme à l'invention,
[Fig 4] la figure 4, une vue de côté d'un second exemple de drone conforme à l'invention,
[Fig 5] la figure 5, une vue de côté d'un troisième exemple de drone conforme à l'invention,
[Fig 6] la figure 6, un schéma de principe illustrant le fonctionnement d'un drone conforme à l'invention,
[Fig 7] la figure 7, un premier logigramme représentatif d'une première variante de procédé de commande d'un drone conforme à l'invention,
[Fig 8] la figure 8, un second logigramme représentatif d'une seconde variante de procédé de commande d'un drone conforme à l'invention,
[Fig 9] la figure 9, une vue de dessus d'un drone illustrant une première position d'impact sur ce drone conforme à l'invention, et
[Fig 10] la figure 10, une autre vue de dessus d'un drone illustrant une seconde position d'impact sur ce drone conforme à l'invention.

Les éléments présents dans plusieurs figures distinctes sont affectés d'une seule et même référence.

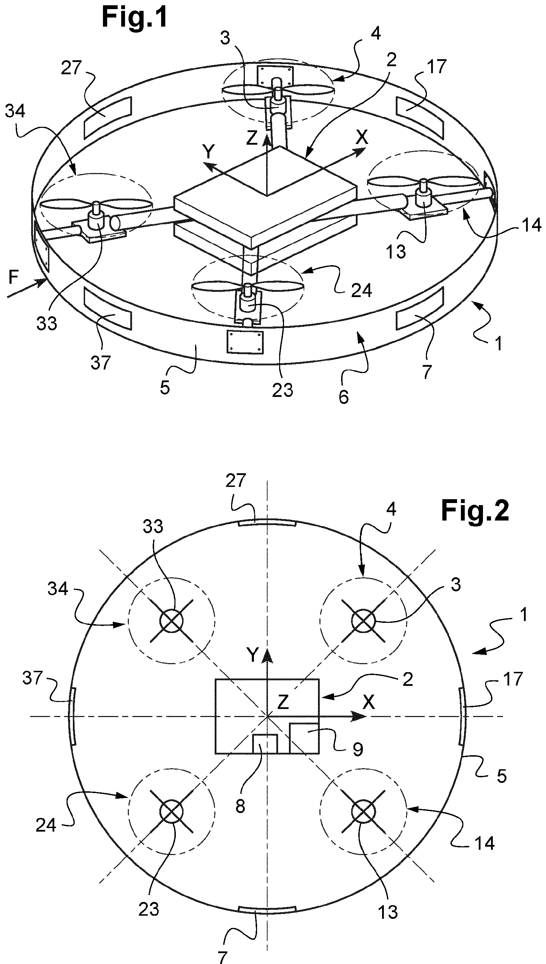

Trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

Tel que représenté à la figure 1, l'invention concerne donc un drone 1 multirotor. Un tel drone 1 comporte ainsi un châssis porteur 2 et par exemple quatre moteurs électriques 3, 13, 23, 33 indépendants solidarisés au châssis porteur 2.

Dans ce cas, le drone 1 comporte alors quatre rotors 4, 14, 24, 34 de propulsion et/ou de sustentation mobiles en rotation indépendamment les uns des autres par rapport au châssis porteur 2. Ces quatre rotors 4, 14, 24, 34 sont alors agencés les uns à coté des autres dans un plan P sensiblement parallèle au plan comprenant les directions longitudinale X et transversale Y. Les axes de rotation des rotors 4, 14, 24, 34 sont alors agencés sensiblement parallèlement à la direction en élévation Z.

En outre, chacun des rotors 4, 14, 24, 34 peut alors être entraîné respectivement en rotation par l'un des moteurs électriques 3, 13, 23, 33.

De plus, le drone 1 comporte une protection continue périphérique 5 permettant de protéger latéralement les rotors 4, 14, 24, 34 en cas de collision du drone 1, 11 avec un obstacle agencé latéralement par rapport à la direction en élévation Z. Cette protection continue périphérique 5 comporte notamment une paroi externe périphérique 6 apte à se déformer élastiquement sous l'effet d'une force de réaction F exercée par l'obstacle sur la paroi externe périphérique 6 lors de la collision.

En outre, une telle protection continue périphérique 5 peut présenter une forme symétrique de révolution permettant d'entourer latéralement les rotors 4, 14, 24, 34. Une telle forme symétrique de révolution peut par exemple être agencée symétriquement autour de la direction en élévation Z.

Cette paroi externe périphérique 6 peut avantageusement présenter une forme choisie parmi le groupe comportant les portions cylindriques, les portions sphériques, les portions ovoïdales et les portions toriques.

Le drone 1 comporte également une pluralité de capteurs de déformation et par exemple quatre capteurs de déformation 7, 17, 27, 37 selon l'exemple illustré. Ces capteurs de déformation 7, 17, 27, 37 sont ainsi agencés au niveau de la paroi externe périphérique 6. Chaque capteur de déformation 7, 17, 27, 37 permet en outre d'effectuer des mesures variant avec une déformation de cette paroi externe périphérique 6.

Ces capteurs de déformation 7, 17, 27, 37 peuvent avantageusement être formés par des extensomètres à fils résistants également appelés jauges de contrainte et peuvent être agencés angulairement de manière équirépartie sur la paroi externe périphérique 6. Selon cet exemple à quatre capteurs de déformation 7, 17, 27, 37, les quatre capteurs de déformation sont angulairement décalés d'un même angle égal à 90 degrés les uns par rapport aux autres.

De plus, un premier capteur de déformation 7 peut être agencé à équidistance de deux rotors adjacents 4 et 14. De même, un deuxième capteur de déformation 17 peut être agencé à équidistance de deux rotors adjacents 14 et 24, un troisième capteur de déformation 27 peut être agencé à équidistance de deux rotors adjacents 24 et 34 et un quatrième capteur de déformation 37 peut être agencé à équidistance de deux rotors adjacents 34 et 4.

Par ailleurs et tel que représentée à la figure 2, une unité de traitement 8 est également agencée sur ou alternativement dans le châssis porteur 2 du drone 1. Cette unité de traitement 8 est ainsi connectée aux capteurs de déformation 7, 17, 27, 37 pour déterminer, à partir de mesures de variations de résistances électriques aux bornes de chaque capteur de déformation 7, 17, 27, 37, une position d'impact de la force de réaction F.

Un organe de commande 9 est également agencé sur le châssis porteur 2 et est connecté à la fois à l'unité de traitement 8 et aux moteurs électriques 3, 13, 23, 33. Cet organe de commande 9 permet alors de générer des consignes de commande des moteurs électriques 3, 13, 23, 33 et donc des rotors 4, 14, 24, 34.

En outre lors d'une collision du drone 1 avec un obstacle, de telles consignes de commande sont alors établies en fonction de la position d'impact de la force de réaction F sur la paroi externe périphérique 6 déterminées à partir de l'unité de traitement 8.

Une telle unité de traitement 8 et l'organe de commande 9 peuvent respectivement comprendre par exemple au moins un processeur et au moins une mémoire, au moins un circuit intégré, au moins un système programmable, au moins un circuit logique, ces exemples ne limitant pas la portée donnée à l'expression « unité de traitement » et « organe de commande ». Le terme processeur peut désigner aussi bien une unité centrale de traitement connue sous l'acronyme CPU, une unité graphique de traitement GPU, une unité digitale connue sous l'acronyme DSP, un microcontrôleur...

De plus, l'unité de traitement 8 et l'organe de commande 9 peuvent tels que représentés être deux entités matériellement disjointes l'une de l'autre ou consister en deux modules ou deux fonctions d'une même entité.

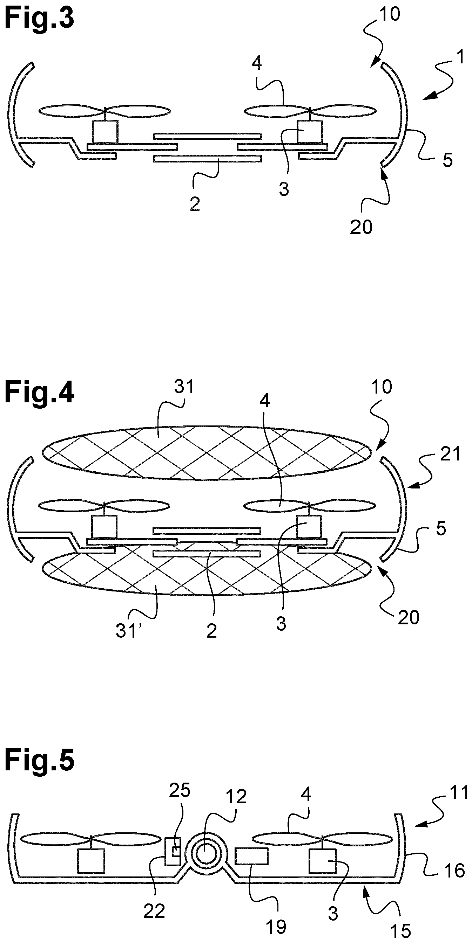

Tels que représentés aux figures 3 et 4, un premier exemple de drone 1 et un second exemple de drone 21 peuvent comporter une protection continue périphérique 5 présentant une ouverture plane supérieure 10 agencée au dessus des rotors 4, 14, 24, 34 et une ouverture plane inférieure 20 agencée en dessous des rotors 4, 14, 24, 34 au regard de la direction en élévation Z.

Selon l'exemple de la figure 4, les ouvertures planes supérieure 10 et inférieure 20 du drone 21 peuvent avantageusement comporter des grilles de protection supérieure 31 et inférieure 31' permettant de protéger en élévation les rotors 4, 14, 24, 34 par exemple lors d'une collision du drone 21 avec un obstacle agencé au dessus et en dessous du drone 21 selon la direction en élévation Z.

Par ailleurs, de tels premier exemple de drone 1 et second exemple de drone 21 peuvent comporter une protection continue périphérique 5 solidarisé selon une liaison de type encastrement avec le châssis porteur 2 du drone 1, 21.

En revanche selon un troisième exemple de drone 11 représenté à la figure 5, la protection continue périphérique 15 peut comporter au moins un degré de mobilité en rotation par rapport au châssis porteur 12 du drone 11. Dans ce cas, lors des mouvements de tangage et/ou de roulis du drone 11 suivant les directions longitudinale X et transversale Y, la protection continue périphérique 15 peut pivoter par rapport au châssis porteur 12 et ainsi garantir une protection optimale des rotors.

Par ailleurs, un tel drone 11 peut comporter un système de cartographie 22 permettant de cartographier les positions d'une pluralité d'obstacles précédemment rencontrés. Ce système de cartographie 22 peut alors comporter au moins une mémoire 25 permettant de stocker itérativement les positions de cette pluralité d'obstacles rencontrés.

Dans ce cas, le système de cartographie 22 est alors avantageusement connecté à l'organe de commande 19 de manière à lui transmettre les positions de cette pluralité d'obstacles. L'organe de commande 19 peut alors générer les consignes de commande des rotors sous la dépendance d'une part de la position d'impact de la force de réaction F sur la paroi externe périphérique 16 et d'autre part des positions de la pluralité d'obstacles stockées dans la mémoire 25.

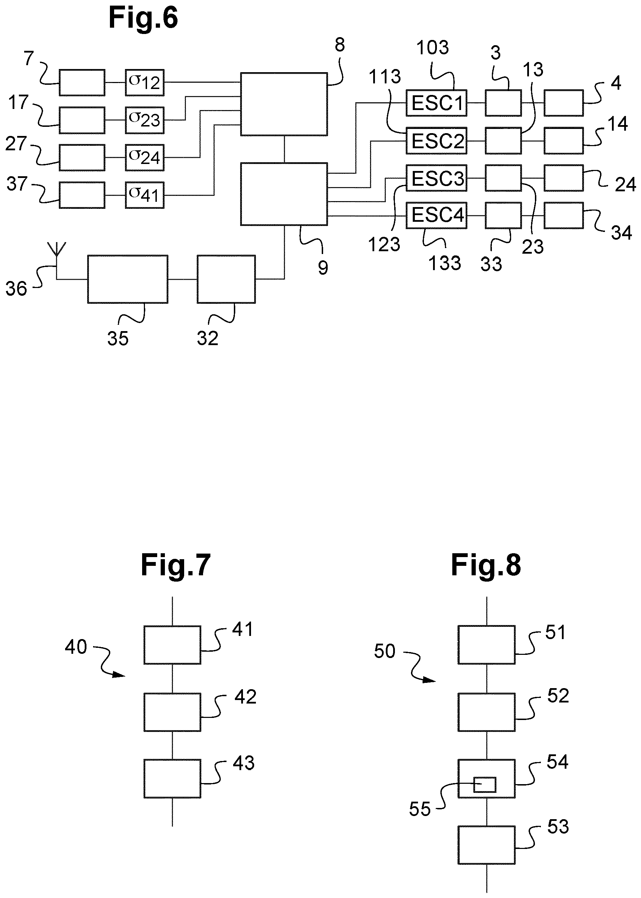

Tel que représenté à la figure 6, un tel drone 1, 21 peut ainsi comporter quatre capteurs de déformation 7, 17, 27, 37 permettant de mesurer une contrainte σ₁₂, σ₂₃, σ₃₄, σ₄₁ lors d'une collision de la paroi externe périphérique 6 avec un obstacle.

Ces mesures des contraintes σ₁₂, σ₂₃, σ₃₄, σ₄₁ sont alors transmises à l'unité de traitement 8 qui détermine une position d'impact de la force de réaction F sur la paroi externe périphérique 6.

Une telle unité de traitement 8 est alors connectée à l'organe de commande 9 qui génère des consignes de commande des moteurs électriques 3, 13, 23, 33 via des circuits électronique 103, 113, 123, 133 de commande en vitesse plus connus par l'expression en langue anglaise « electronic speed control » et généralement désignée par son acronyme « ESC ». Les consignes de commande des moteurs électriques 3, 13, 23, 33 sont ainsi générées indirectement en fonction de la position d'impact de la force de réaction F sur la paroi externe périphérique 6 déterminées par l'unité de traitement 8.

En outre, une centrale de commande inertielle 32 peut également être connectée à l'organe de commande 9, une antenne 36 étant également connectée à un récepteur 35 pour recevoir des consignes de commande permettant de piloter un tel drone à distance. Un tel agencement particulier du drone peut par exemple être envisagé pour permettre au drone d'effectuer des missions dans des zones situées en extérieur et pouvant présenter une faible visibilité.

Telle que représentée aux figures 7 et 8, l'invention se rapporte également à un procédé de commande 40, 50 du drone 1, 11, 21 multirotor précédemment décrit aux figures 1 à 6.

En outre, le procédé 40, 50 comporte une étape de détection 41, 51 d'une déformation de la paroi externe périphérique 6, 16, une étape de traitement 42, 52 pour déterminer, à partir de la déformation de la paroi externe périphérique 6, 16, une position d'impact de la force de réaction F, et une étape de commande 43, 53 générant des consignes de commande des rotors 4, 14, 24, 34.

Ces consignes de commande sont ainsi générées sous la dépendance de la position d'impact de la force de réaction F sur la paroi externe périphérique 6, 16 déterminées à l'étape de traitement 42, 52.

Selon une première variante de procédé de commande d'un drone représentée à la figure 7, une telle étape de commande 43 peut alors générer les consignes de commande pour orienter le drone 1, 21 suivant une direction de repli orientée depuis la position d'impact de la force de réaction F sur la paroi externe périphérique 6 vers un centre géométrique du drone 1.

En outre, les consignes de commande des rotors 4, 14, 24, 34 sont donc choisies en fonction de la position d'impact qui peut être définie par une valeur angulaire θ définie par rapport à un axe de référence passant dans le plan P par exemple par le centre géométrique du drone 1 et l'axe du premier rotor 4. Ainsi, les vitesses de rotation des différents rotors 4, 14, 24, 34 peuvent être fonction de la valeur angulaire θ de la position d'impact.

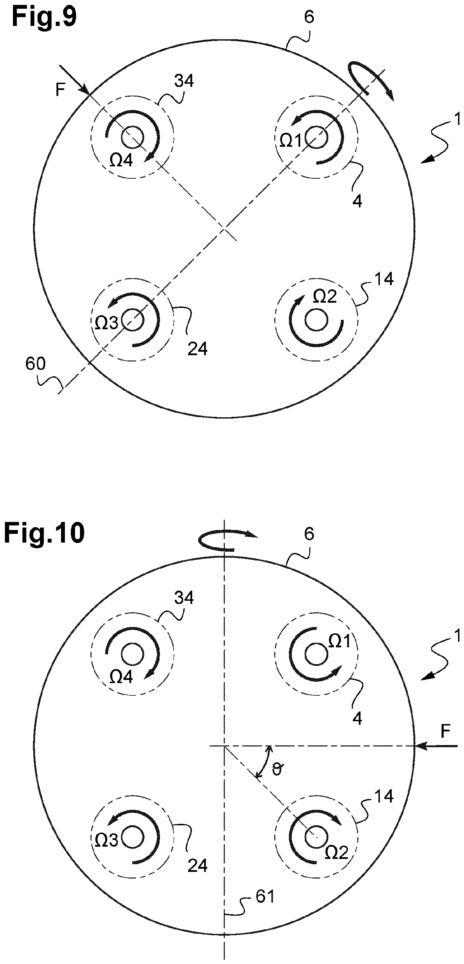

Par exemple tel que représenté à la figure 9 , lorsque le premier rotor 4 tourne à une première vitesse de rotation Ω1, le deuxième rotor 14 tourne à une deuxième vitesse de rotation Ω2, le troisième rotor 24 tourne à une troisième vitesse de rotation Ω3 et le quatrième rotor 34 tourne à une quatrième vitesse de rotation Ω4 et que la direction de repli est agencée de manière concourante avec un axe de rotation du quatrième rotor 34 agencé en regard de la position d'impact de la force de réaction F sur la paroi externe périphérique 6, alors l'étape de commande 43 peut générer les consignes de commande pour augmenter la quatrième vitesse de rotation Ω4 du quatrième rotor, pour baisser la deuxième vitesse de rotation Ω2 du deuxième rotor 14 agencé à l'opposé de la position d'impact et pour maintenir constante les première et troisième vitesses de rotation Ω1 et Ω3 des premier et troisième rotors 4 et 24 agencés de part et d'autre de la direction de repli.

Avantageusement, les première et troisième vitesses de rotation Ω1 et Ω3 peuvent être par ailleurs choisies égales entre elles. Le drone 1 pivote alors autour d'un axe 60 inscrit dans le plan P, cet axe 60 étant perpendiculaire à la direction de repli.

Alternativement et tel que représenté à la figure 10, lorsque la direction de repli est non concourante avec les quatre axes de rotation des premier, deuxième, troisième et quatrième rotors 4, 14, 24, 34 et que les premier et deuxième rotors 4 et 14 sont agencés à proximité de la position d'impact de la force de réaction F sur la paroi externe périphérique 6, l'étape de commande 43 peut dans ce cas générer les consignes de commande pour augmenter les première, deuxième et quatrième vitesses de rotation Ω1, Ω2 et Ω4 et pour baisser la troisième vitesse de rotation Ω3.

Avantageusement, les troisième et quatrième vitesses de rotation Ω3 et Ω4 peuvent être par ailleurs choisies égales entre elles. Le drone 1 pivote alors autour d'un axe 61 inscrit dans le plan P, cet axe 61 étant perpendiculaire à la direction de repli.

En outre, selon une seconde variante de procédé de commande d'un drone représentée à la figure 8, le procédé 50 peut comporter une étape de cartographie 54 pour cartographier les positions d'une pluralité d'obstacles. Cette étape de cartographie 54 peut ainsi comporter au moins une sous étape de mémorisation 55 pour stocker dans la mémoire 25 du drone 11 les positions de la pluralité d'obstacles précédemment rencontrés.

Ainsi, l'étape de commande 53 peut générer les consignes de commande sous la dépendance d'une part de la position d'impact de la force de réaction F sur la paroi externe périphérique 16 et d'autre part des positions de la pluralité d'obstacles stockées dans la mémoire 25.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles de la présente invention, qui est définie par les revendications annexées.

## Revendications

1. Drone (1, 11, 21) multirotor, ledit drone (1, 11, 21) comportant :
• un châssis porteur (2, 12),
• au moins deux rotors (4, 14, 24, 34) de propulsion et/ou de sustentation mobiles en rotation indépendamment les uns des autres par rapport audit châssis porteur (2, 12), lesdits au moins deux rotors (4, 14, 24, 34) étant agencés les uns à côté des autres dans un plan P,
• une protection continue périphérique (5, 15) protégeant latéralement lesdits au moins deux rotors (4, 14, 24, 34) lors d'une collision dudit drone (1, 11, 21) avec un obstacle agencé latéralement par rapport à une direction en élévation Z, ladite direction en élévation Z étant agencée perpendiculairement audit plan P, ladite protection continue périphérique (5, 15) comportant une paroi externe périphérique (6, 16) apte à se déformer élastiquement sous l'effet d'une force de réaction F exercée par ledit obstacle sur ladite paroi externe périphérique (6, 16) lors de ladite collision, et
• au moins deux capteurs de déformation (7, 17, 27, 37) agencés au niveau de ladite paroi externe périphérique (6, 16), chaque capteur de déformation (7, 17, 27, 37) étant apte à effectuer des mesures variant en fonction d'une déformation de ladite paroi externe périphérique (6, 16),
**caractérisé en ce que** ledit drone (1, 11, 21) comporte :
• une unité de traitement (8) connectée auxdits au moins deux capteurs de déformation (7, 17, 27, 37), ladite unité de traitement (8) étant configurée pour déterminer, à partir des mesures de chaque capteur de déformation (7, 17, 27, 37), une position d'impact de ladite force de réaction F, et
• un organe de commande (9, 19) pour générer des consignes de commande desdits au moins deux rotors (4, 14, 24, 34), lesdites consignes de commande étant générées sous la dépendance de ladite position d'impact.

2. Drone selon la revendication 1,
**caractérisé en ce que** au moins un desdits au moins deux capteurs de déformation (7, 17, 27, 37) est agencé à équidistance de deux rotors adjacents (4 et 14, 14 et 24, 24 et 34, 34 et 4) desdits au moins deux rotors (4, 14, 24, 34).

3. Drone selon l'une quelconque des revendications 1 à 2, **caractérisé en ce que** ladite protection continue périphérique (5) est solidarisée selon une liaison de type encastrement avec ledit châssis porteur (2) dudit drone (1, 21).

4. Drone selon l'une quelconque des revendications 1 à 2, **caractérisé en ce que** ladite protection continue périphérique (15) comporte au moins un degré de mobilité en rotation par rapport audit châssis porteur (12) dudit drone (11).

5. Drone selon l'une quelconque des revendications 1 à 4, **caractérisé en ce que** ladite protection continue périphérique (5, 15) présente une forme symétrique de révolution, lesdits au moins deux capteurs de déformation (7, 17, 27, 37) étant agencés angulairement de façon équirépartie au niveau de ladite paroi externe périphérique (6, 16).

6. Drone selon l'une quelconque des revendications 1 à 5, **caractérisé en ce que** ladite paroi externe périphérique (6, 16) présente une forme choisie parmi le groupe comportant les portions cylindriques, les portions sphériques, les portions ovoïdales et les portions toriques.

7. Drone selon l'une quelconque des revendications 1 à 6, **caractérisé en ce que** ladite protection continue périphérique (5, 15) présente une ouverture plane supérieure (10) agencée au dessus desdits au moins deux rotors (4, 14, 24, 34) et une ouverture plane inférieure (20) agencée en dessous desdits au moins deux rotors (4, 14, 24, 34) au regard de ladite direction en élévation Z.

8. Drone selon la revendication 7,
**caractérisé en ce que** l'une au moins desdites ouvertures planes supérieure (10) et inférieure (20) comporte une grille de protection (31, 31') permettant de protéger en élévation lesdits au moins deux rotors (4, 14, 24, 34)

9. Drone selon l'une quelconque des revendications 1 à 8, **caractérisé en ce que** ledit organe de commande (9) génère lesdites consignes de commande pour orienter ledit drone (1, 11, 21) suivant une direction de replit orientée depuis ladite position d'impact de ladite force de réaction F sur ladite paroi externe périphérique (6) vers un centre géométrique dudit drone (1, 11, 21).

10. Drone selon l'une quelconque des revendications 1 à 9, **caractérisé en ce que** ledit drone (11) comporte un système de cartographie (22) pour cartographier des positions d'une pluralité d'obstacles, ledit système de cartographie (22) comportant au moins une mémoire (25) pour stocker lesdites positions de ladite pluralité d'obstacles.

11. Drone selon la revendication 10,
**caractérisé en ce que**, ledit système de cartographie (22) étant connecté audit organe de commande (19), ledit organe de commande (19) génère lesdites consignes de commande sous la dépendance d'une part de ladite position d'impact de ladite force de réaction F sur ladite paroi externe périphérique (16) et d'autre part desdites positions de ladite pluralité d'obstacles stockées dans ladite mémoire (25).

12. Procédé de commande (40, 50) d'un drone (1, 11, 21) multirotor, ledit drone (1, 11, 21) comportant :
• un châssis porteur (2, 12),
• au moins deux rotors (4, 14, 24, 34) de propulsion et/ou de sustentation mobiles en rotation indépendamment les uns des autres par rapport audit châssis porteur (2, 12), lesdits au moins deux rotors (4, 14, 24, 34) étant agencés les uns à côté des autres dans un plan P,
• une protection continue périphérique (5, 15) protégeant latéralement lesdits au moins deux rotors (4, 14, 24, 34) lors d'une collision dudit drone (1, 11, 21) avec un obstacle agencé latéralement par rapport à une direction en élévation Z, ladite direction en élévation Z étant agencée perpendiculairement audit plan P, ladite protection continue périphérique (5, 15) comportant une paroi externe périphérique (6, 16) apte à se déformer élastiquement sous l'effet d'une force de réaction F exercée par ledit obstacle sur ladite paroi externe périphérique (6, 16) lors de ladite collision,
**caractérisé en ce que** ledit procédé (40, 50) comporte au moins :
• une étape de détection (41, 51) d'une déformation de ladite paroi externe périphérique (6, 16),
• une étape de traitement (42, 52) pour déterminer, à partir de ladite déformation de ladite paroi externe périphérique (6, 16), une position d'impact de ladite force de réaction F, et
• une étape de commande (43, 53) générant des consignes de commande desdits au moins deux rotors (4, 14, 24, 34), lesdites consignes de commande étant générées sous la dépendance de ladite position d'impact de ladite force de réaction F sur ladite paroi externe périphérique (6, 16) déterminée à ladite étape de traitement (42, 52).

13. Procédé selon la revendication 12,
**caractérisé en ce que** ladite étape de commande (43) génère lesdites consignes de commande pour commander un déplacement dudit drone (1, 11, 21) suivant une direction de repli orientée depuis ladite position d'impact de ladite force de réaction F sur ladite paroi externe périphérique (6) vers un centre géométrique dudit drone (1, 11, 21).

14. Procédé selon la revendication 13,
**caractérisé en ce que**, lesdits au moins deux rotors (4, 14, 24, 34) comprenant un premier rotor (4) tournant à une première vitesse de rotation Ω1, un deuxième rotor (14) tournant à une deuxième vitesse de rotation Ω2, un troisième rotor (24) tournant à une troisième vitesse de rotation Ω3 et un quatrième rotor (34) tournant à une quatrième vitesse de rotation Ω4 et ladite direction de repli étant concourante avec au moins un axe de rotation dudit quatrième rotor (34) agencé en regard de ladite position d'impact de ladite force de réaction F sur ladite paroi externe périphérique (6), ladite étape de commande (43) génère lesdites consignes de commande pour augmenter ladite quatrième vitesse de rotation Ω4 dudit quatrième rotor, pour baisser ladite deuxième vitesse de rotation Ω2 dudit deuxième rotor (14) agencé à l'opposé de ladite position d'impact et pour maintenir constante lesdites première et troisième vitesses de rotation Ω1 et Ω3 desdits premier et troisième rotors (4 et 24) agencés de part et d'autre de ladite direction de repli.

15. Procédé selon la revendication 13,
**caractérisé en ce que**, lesdits au moins deux rotors (4, 14, 24, 34) comprenant un premier rotor (4) tournant à une première vitesse de rotation Ω1, un deuxième rotor (14) tournant à une deuxième vitesse de rotation Ω2, un troisième rotor (24) tournant à une troisième vitesse de rotation Ω3 et un quatrième rotor (34) tournant à une quatrième vitesse de rotation Ω4, ladite direction de repli étant non concourante avec les quatre axes de rotation des premier, deuxième, troisième et quatrième rotors (4, 14, 24, 34) et lesdits premier et deuxième rotors (4 et 14) étant agencés à proximité de ladite position d'impact de ladite force de réaction F sur ladite paroi externe périphérique (6), ladite étape de commande (43) génère lesdites consignes de commande pour augmenter lesdites première, deuxième et quatrième vitesses de rotation Ω1, Ω2 et Ω4 et pour baisser ladite troisième vitesse de rotation Ω3.

16. Procédé selon l'une quelconque des revendications 12 à 15, **caractérisé en ce que** ledit procédé (50) comporte une étape de cartographie (54) pour cartographier des positions d'une pluralité d'obstacles, ladite étape de cartographie (54) comportant au moins une sous étape de mémorisation (55) pour stocker dans une mémoire (25) lesdites positions de ladite pluralité d'obstacles.

17. Procédé selon la revendication 16,
**caractérisé en ce que** ladite étape de commande (53) génère lesdites consignes de commande sous la dépendance d'une part de ladite position d'impact de ladite force de réaction F sur ladite paroi externe périphérique (16) et d'autre part desdites positions de ladite pluralité d'obstacles stockées dans ladite mémoire (25).

## Patentansprüche

1. Drohne (1, 11, 21) mit mehreren Rotoren, wobei die Drohne (1, 11, 21) aufweist:
- ein Trägergestell (2, 12),
- mindestens zwei Antriebs- und/oder Auftriebsrotoren (4, 14, 24, 34), die unabhängig voneinander in Bezug auf das Trägergestell (2, 12) drehbar sind, wobei die mindestens zwei Rotoren (4, 14, 24, 34) in einer Ebene P nebeneinander angeordnet sind,
- einen durchgehenden Umfangsschutz (5, 15), der die mindestens zwei Rotoren (4, 14, 24, 34) bei einer Kollision der Drohne (1, 11, 21) mit einem in Bezug auf eine Höhenrichtung Z seitlich angeordneten Hindernis seitlich schützt, wobei die Höhenrichtung Z senkrecht zu der Ebene P verläuft, wobei der durchgehende Umfangsschutz (5, 15) eine äußere Umfangswand (6, 16) umfasst, die geeignet ist, sich unter der Wirkung einer Reaktionskraft F, die von dem Hindernis bei der Kollision auf die äußere Umfangswand (6, 16) ausgeübt wird, elastisch zu verformen, und
- mindestens zwei Deformationssensoren (7, 17, 27, 37), die an der äußeren Umfangswand (6, 16) angeordnet sind, wobei jeder Deformationssensor (7, 17, 27, 37) geeignet ist, Messungen durchzuführen, die sich in Abhängigkeit von einer Deformation der äußeren Umfangswand (6, 16) ändern,
**dadurch gekennzeichnet, dass** die Drohne (1, 11, 21) umfasst:
- eine Verarbeitungseinheit (8), die mit den mindestens zwei Deformationssensoren (7, 17, 27, 37) verbunden ist, wobei die Verarbeitungseinheit (8) konfiguriert ist, um aus den Messungen jedes Deformationssensors (7, 17, 27, 37) eine Aufprallposition der Reaktionskraft F zu bestimmen, und
- eine Steuereinheit (9, 19) zum Erzeugen von Steuerbefehlen für die mindestens zwei Rotoren (4, 14, 24, 34), wobei die Steuerbefehle in Abhängigkeit von der Aufprallposition erzeugt werden.

2. Drohne nach Anspruch 1,
**dadurch gekennzeichnet, dass** mindestens einer der mindestens zwei Deformationssensoren (7, 17, 27, 37) in gleichem Abstand zu zwei benachbarten Rotoren (4 und 14, 14 und 24, 24 und 34, 34 und 4) der mindestens zwei Rotoren (4, 14, 24, 34) angeordnet ist.

3. Drohne nach einem der Ansprüche 1 bis 2,
**dadurch gekennzeichnet, dass** der durchgehende Umfangsschutz (5) über eine Verbindung vom Typ Einbettung mit dem Trägergestell (2) der Drohne (1, 21) fest verbunden ist.

4. Drohne nach einem der Ansprüche 1 bis 2,
**dadurch gekennzeichnet, dass** der durchgehende Umfangsschutz (15) mindestens einen Drehfreiheitsgrad in Bezug auf das Trägergestell (12) der Drohne (11) aufweist.

5. Drohne nach einem der Ansprüche 1 bis 4,
**dadurch gekennzeichnet, dass** der durchgehende Umfangsschutz (5, 15) eine rotationssymmetrische Form aufweist, wobei die mindestens zwei Deformationssensoren (7, 17, 27, 37) an der äußeren Umfangswand (6, 16) gleichmäßig winkelverteilt sind.

6. Drohne nach einem der Ansprüche 1 bis 5,
**dadurch gekennzeichnet, dass** die äußere Umfangswand (6, 16) eine Form aufweist, die aus der Gruppe ausgewählt ist, die zylindrische Abschnitte, kugelförmige Abschnitte, eiförmige Abschnitte und torusförmige Abschnitte umfasst.

7. Drohne nach einem der Ansprüche 1 bis 6,
**dadurch gekennzeichnet, dass** der durchgehende Umfangsschutz (5, 15) in Bezug auf die Höhenrichtung Z eine obere ebene Öffnung (10), die über den mindestens zwei Rotoren (4, 14, 24, 34) angeordnet ist, und eine untere ebene Öffnung (20), die unter den mindestens zwei Rotoren (4, 14, 24, 34) angeordnet ist, aufweist.

8. Drohne nach Anspruch 7,
**dadurch gekennzeichnet, dass** mindestens eine der oberen (10) und unteren (20) ebenen Öffnungen ein Schutzgitter (31, 31') aufweist, das es ermöglicht, die mindestens zwei Rotoren (4, 14, 24, 34) in Höhenrichtung zu schützen.

9. Drohne nach einem der Ansprüche 1 bis 8,
**dadurch gekennzeichnet, dass** die Steuereinheit (9) die Steueranweisungen erzeugt, um die Drohne (1, 11, 21) in einer Rückzugsrichtung auszurichten, die von der Aufprallposition der Reaktionskraft F auf die äußere Umfangswand (6) zu einem geometrischen Mittelpunkt der Drohne (1, 11, 21) ausgerichtet ist.

10. Drohne nach einem der Ansprüche 1 bis 9,
**dadurch gekennzeichnet, dass** die Drohne (11) ein Kartierungssystem (22) zum Kartieren von Positionen einer Mehrzahl von Hindernissen aufweist, wobei das Kartierungssystem (22) mindestens einen Speicher (25) zum Speichern der Positionen der Mehrzahl von Hindernissen aufweist.

11. Drohne nach Anspruch 10,
**dadurch gekennzeichnet, dass** das Kartierungssystem (22) mit der Steuereinheit (19) verbunden ist, und die Steuereinheit (19) die Steueranweisungen in Abhängigkeit einerseits von der Aufprallposition der Reaktionskraft F auf die äußere Umfangswand (16) und andererseits von den in dem Speicher (25) gespeicherten Positionen der Mehrzahl von Hindernissen erzeugt.

12. Verfahren zum Steuern (40, 50) einer Drohne (1, 11, 21) mit mehreren Rotoren, wobei die Drohne (1, 11, 21) umfasst:
- ein Trägergestell (2, 12),
- mindestens zwei Antriebs- und/oder Auftriebsrotoren (4, 14, 24, 34), die unabhängig voneinander in Bezug auf das Trägergestell (2, 12) drehbar sind, wobei die mindestens zwei Rotoren (4, 14, 24, 34) in einer Ebene P nebeneinander angeordnet sind,
- einen durchgehenden Umfangsschutz (5, 15), der die mindestens zwei Rotoren (4, 14, 24, 34) bei einer Kollision der Drohne (1, 11, 21) mit einem in Bezug auf eine Höhenrichtung Z seitlich angeordneten Hindernis seitlich schützt, wobei die Höhenrichtung Z senkrecht zu der Ebene P verläuft, wobei der durchgehende Umfangsschutz (5, 15) eine äußere Umfangswand (6, 16) umfasst, die geeignet ist, sich unter der Wirkung einer Reaktionskraft F, die von dem Hindernis bei der Kollision auf die äußere Umfangswand (6, 16) ausgeübt wird, elastisch zu verformen,
**dadurch gekennzeichnet, dass** das Verfahren (40, 50) mindestens umfasst :
- einen Schritt des Erfassens (41, 51) einer Verformung der äußeren Umfangswand (6, 16),
- einen Verarbeitungsschritt (42, 52), um aus der Verformung der äußeren Umfangswand (6, 16) eine Aufprallposition der Reaktionskraft F zu bestimmen, und
- einen Steuerschritt (43, 53), der Steueranweisungen für die mindestens zwei Rotoren (4, 14, 24, 34) erzeugt, wobei die Steueranweisungen in Abhängigkeit von der in dem Verarbeitungsschritt (42, 52) ermittelten Auftreffposition der Reaktionskraft F auf die äußere Umfangswand (6, 16) erzeugt werden.

13. Verfahren nach Anspruch 12,
**dadurch gekennzeichnet, dass** der Steuerschritt (43) die Steueranweisungen erzeugt, um eine Bewegung der Drohne (1, 11, 21) entlang einer Rückzugsrichtung zu steuern, die von der Auftreffposition der Reaktionskraft F auf die äußere Umfangswand (6) zu einem geometrischen Mittelpunkt der Drohne (1, 11, 21) hin orientiert ist.

14. Verfahren nach Anspruch 13,
**dadurch gekennzeichnet, dass** die mindestens zwei Rotoren (4, 14, 24, 34) einen ersten Rotor (4) umfassen, der mit einer ersten Drehgeschwindigkeit Q1 rotiert, einen zweiten Rotor (14), der mit einer zweiten Drehgeschwindigkeit Q2 rotiert, einen dritten Rotor (24), der mit einer dritten Rotationsgeschwindigkeit Q3 rotiert, und einen vierten Rotor (34), der mit einer vierten Rotationsgeschwindigkeit Q4 rotiert, und wobei die Rückzugsrichtung mit mindestens einer Rotationsachse des vierten Rotors (34) zusammenfällt, die der Position des Aufpralls der Reaktionskraft F auf die äußere Umfangswand (6) zugewandt angeordnet ist, und dass der Steuerschritt (43) die Steueranweisungen erzeugt, um die vierte Drehgeschwindigkeit Q4 des vierten Rotors zu erhöhen, die zweite Drehgeschwindigkeit Q2 des zweiten Rotors (14), der entgegengesetzt zu der Aufprallposition angeordnet ist, zu senken und die erste und dritte Drehgeschwindigkeit Q1 und Q3 des ersten und dritten Rotors (4 und 24), die auf beiden Seiten der Rückzugsrichtung angeordnet sind, konstant zu halten.

15. Verfahren nach Anspruch 13,
**dadurch gekennzeichnet, dass** die mindestens zwei Rotoren (4, 14, 24, 34) einen ersten Rotor (4), der mit einer ersten Drehgeschwindigkeit Q1 rotiert, einen zweiten Rotor (14), der mit einer zweiten Drehgeschwindigkeit Q2 rotiert, einen dritten Rotor (24), der mit einer dritten Drehgeschwindigkeit Q3 rotiert, und einen vierten Rotor (34), der mit einer vierten Drehgeschwindigkeit Q4 rotiert, umfassen, wobei die Rückzugsrichtung nicht mit den vier Drehachsen des ersten, zweiten, dritten und vierten Rotors (4, 14, 24, 34) zusammenfällt, und wobei der erste und zweite Rotor (4 und 14) in der Nähe der Aufprallposition der Reaktionskraft F auf die äußere Umfangswand (6) angeordnet sind, wobei der Steuerschritt (43) die Steueranweisungen erzeugt, um die erste, zweite und vierte Drehgeschwindigkeit Q1, Q2 und Q4 zu erhöhen und die dritte Drehgeschwindigkeit Q3 zu senken.

16. Verfahren nach einem der Ansprüche 12 bis 15,
**dadurch gekennzeichnet, dass** das Verfahren (50) einen Kartierungsschritt (54) zum Kartieren von Positionen einer Mehrzahl von Hindernissen umfasst, wobei der Kartierungsschritt (54) mindestens einen Speicherunterschritt (55) zum Speichern der Positionen der Mehrzahl von Hindernissen in einem Speicher (25) umfasst.

17. Verfahren nach Anspruch 16,
**dadurch gekennzeichnet, dass** der Steuerschritt (53) die Steueranweisungen in Abhängigkeit einerseits von der Aufprallposition der Reaktionskraft F auf die äußere Umfangswand (16) und andererseits von den in dem Speicher (25) gespeicherten Positionen der Mehrzahl von Hindernissen erzeugt.

## Claims

1. Multi-rotor drone (1, 11, 21), the drone (1, 11, 21) including:
• a support frame (2, 12),
• at least two propulsion and/or lifting rotors (4, 14, 24, 34), rotatable independently of each other in relation to the support frame (2, 12), the at least two rotors (4, 14, 24, 34) being positioned alongside each other in a plane P,
• a continuous peripheral protection (5, 15) laterally protecting the at least two rotors (4, 14, 24, 34) at the time of a collision of the drone (1, 11, 21) with an obstacle positioned laterally in relation to an elevation direction Z, the elevation direction Z being positioned perpendicularly to the plane P, the continuous peripheral protection (5, 15) including a peripheral external wall (6, 16) able to elastically distort under the effect of a reactive force F exerted by the obstacle on the peripheral external wall (6, 16) at the time of the collision, and
• at least two distortion sensors (7, 17, 27, 37) positioned at the peripheral external wall (6, 16), each distortion sensor (7, 17, 27, 37) being able to take measurements that vary according to the level of distortion of the peripheral external wall (6, 16),
**characterised in that** the drone (1, 11, 21) includes:
• a processing unit (8) connected to the at least two distortion sensors (7, 17, 27, 37), the processing unit (8) being configured to determine, from the measurements from each distortion sensor (7, 17, 27, 37), a position of impact of the said reactive force F, and
• a control device (9, 19) for generating command instructions for the at least two rotors (4, 14, 24, 34), the commands being generated dependent on the position of impact.

2. Drone according to Claim 1,
**characterised in that** at least one of the at least two distortion sensors (7, 17, 27, 37) is positioned equidistant from two adjacent rotors (4 and 14, 14 and 24, 24 and 34, 34 and 4) of the at least two rotors (4, 14, 24, 34).

3. Drone according to any of Claims 1 to 2,
**characterised in that** the continuous peripheral protection (5) is fastened using a flush-mounting type of connection with the support frame (2) of the drone (1, 21).

4. Drone according to any of Claims 1 to 2,
**characterised in that** the continuous peripheral protection (15) contains at least a degree of rotational mobility in relation to the support frame (12) of the drone (11).

5. Drone according to any of Claims 1 to 4,
**characterised in that** the continuous peripheral protection (5, 15) has a symmetrical form of revolution, the at least two distortion sensors (7, 17, 27, 37) being positioned angularly in a uniformly distributed manner at the peripheral external wall (6, 16).

6. Drone according to any of Claims 1 to 5,
**characterised in that** the peripheral external wall (6, 16) has a form chosen from the group including cylindrical, spherical, ovoid and toroidal portions.

7. Drone according to any of Claims 1 to 6,
**characterised in that** the continuous peripheral protection (5, 15) has a upper planar opening (10) positioned above the at least two rotors (4, 14, 24, 34) and a lower planar opening (20) positioned below the at least two rotors (4, 14, 24, 34) relative to the elevation direction Z.

8. Drone according to Claim 7,
**characterised in that** at least one of the upper (10) and lower (20) planar openings contains a protective grill (31, 31') for protecting the at least two rotors (4, 14, 24, 34) in elevation.

9. Drone according to any of Claims 1 to 8,
**characterised in that** the control device (9) generates the command instructions to guide the drone (1, 11, 21) in a falling direction oriented from the position of impact of the reactive force F on the peripheral external wall (6) to a geometric centre of the drone (1, 11, 21).

10. Drone according to any of Claims 1 to 9,
**characterised in that** the drone (11) includes a mapping system (22) for mapping the positions of a plurality of obstacles, the mapping system (22) containing at least a memory (25) for storing the positions of the plurality of obstacles.

11. Drone according to Claim 10,
**characterised in that**, given that the mapping system (22) is connected to the control device (19), the control device (19) generates the command instructions depending on one hand on the position of impact of the reactive force F on the peripheral external wall (16) and on the other hand on the positions of the plurality of obstacles stored in the memory (25).

12. Command method (40, 50) for a multi-rotor drone (1, 11, 21), the drone (1, 11, 21) including:
• a support frame (2, 12),
• at least two propulsion and/or lifting rotors (4, 14, 24, 34), rotatable independently of each other in relation to the said support frame (2, 12), the at least two rotors (4, 14, 24, 34) being positioned alongside each other in a plane P,
• a continuous peripheral protection (5, 15) laterally protecting the at least two rotors (4, 14, 24, 34) at the time of a collision of the drone (1, 11, 21) with an obstacle positioned laterally in relation to an elevation direction Z, the elevation direction Z being positioned perpendicularly with respect to the plane P, the continuous peripheral protection (5, 15) including a peripheral external wall (6, 16) able to elastically distort under the effect of a reactive force F exerted by the obstacle on the peripheral external wall (6, 16) at the time of the collision,
**characterised in that** the method (40, 50) includes at least:
• a detection stage (41, 51) for distortion of the peripheral external wall (6, 16),
• a processing stage (42, 52) for determining the position of impact of the reactive force F from the distortion of the peripheral external wall (6, 16), and
• a command stage (43, 53) generating command instructions for the at least two rotors (4, 14, 24, 34), the command instructions being generated depending on the position of impact of the reactive force F on the peripheral external wall (6, 16) determined at the processing stage (42, 52).

13. Method according to Claim 12,
**characterised in that** the command stage (43) generates the command instructions to command a movement of the drone (1, 11, 21) in a falling direction oriented from the position of impact of the reactive force F on the peripheral external wall (6) to a geometric centre of the drone (1, 11,21).

14. Method according to Claim 13,
**characterised in that** the at least two rotors (4, 14, 24, 34) include a first rotor (4) turning at an first rotation speed Ω1, a second rotor (14) turning at a second rotation speed Ω2, a third rotor (24) turning at a third rotation speed Ω3 and a fourth rotor (34) turning at a fourth rotation speed Ω4 and the falling direction being concurrent with at least one axis of rotation of the fourth rotor (34) positioned in relation to the position of impact of the reactive force F on the peripheral external wall (6), the command stage (43) generates the command instructions to increase the fourth rotation speed Ω4 of the fourth rotor, to reduce the second rotation speed Ω2 of the second rotor (14) positioned opposite the position of impact, and to keep constant the first and third rotation speeds Ω1 and Ω3 of the first and third rotors (4 and 24) positioned on either side of the falling direction.

15. Method according to Claim 13,
**characterised in that** as the at least two rotors (4, 14, 24, 34) include a first rotor (4) turning at an first rotation speed Ω1, a second rotor (14) turning at a second rotation speed Ω2, a third rotor (24) turning at a third rotation speed Ω3 and a fourth rotor (34) turning at a fourth rotation speed Ω4, the falling direction not being concurrent with the four axes of rotation of the first, second, third and fourth rotors (4, 14, 24, 34) and the first and second rotors (4 and 14) being positioned close to the position of impact of the reactive force F on the peripheral external wall (6), the command stage (43) generates the command instructions to increase the said first, second and fourth rotation speeds Ω1, Ω2 and Ω4 and to reduce the third rotation speed Ω3.

16. Method according to any of Claims 12 to 15,
**characterised in that** the method (50) includes a mapping stage (54) for mapping the positions of a plurality of obstacles, the mapping stage (54) including at least one memorisation sub-stage (55) for storing the positions of the plurality of obstacles in a memory (25).

17. Method according to Claim 16,
**characterised in that** the command stage (53) generates the command instructions depending on one hand on the position of impact of the reactive force F on the peripheral external wall (16) and on the other hand on the positions of the plurality of obstacles stored in the memory (25).
